(19) Europäisches Patentamt / European Patent Office / Office européen des brevets

(11) **EP 4 528 587 A1**

(12) **EUROPEAN PATENT APPLICATION**

(43) Date of publication:
26.03.2025 Bulletin 2025/13

(21) Application number: 23203200.3

(22) Date of filing: 12.10.2023

(51) International Patent Classification (IPC):
$G06N\ 3/042^{(2023.01)}$  $G06N\ 3/084^{(2023.01)}$
$G06N\ 3/09^{(2023.01)}$  $G06N\ 3/092^{(2023.01)}$

(52) Cooperative Patent Classification (CPC):
G06N 3/092; G06N 3/042; G06N 3/084; G06N 3/09;
G06N 3/044; G06N 3/0464

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.09.2023 US 202363539190 P

(71) Applicant: Hitachi Energy Ltd
8050 Zürich (CH)

(72) Inventors:
• SHIRSAT, Ashwin
Apex, 27523 (US)

• POLAND, Jan
5415 Nussbaumen (CH)
• DAWIDOWSKI, Pawel
32-010 Malopolskie (PL)
• IU OLDEEN, Joakim
77134 Ludvika (SE)
• CHMIELOWIEC, Krzystof
32-089 Beblo (PL)
• BOMBA, Piotr
26-400 Lipno (PL)
• MARINO, David
Montreal, H2R 2P1 (CA)

(74) Representative: Vossius & Partner
Patentanwälte Rechtsanwälte mbB
Siebertstraße 3
81675 München (DE)

(54) **TRAINING FOR AN INTEGRATED GRAPH NEURAL NETWORK AND NON-LINEAR ITERATIVE ALGORITHM**

(57) While single-shot machine learning has demonstrated promise in the context of power-flow analysis, the lack of interpretability and maturity in machine-learning models prevents confidence in their solutions. Accordingly, an integrated model is disclosed. The integrated model may comprise a machine-learning model that provides a warm-start solution for an interpretable and well-tested non-linear iterative algorithm, such as the Newton-Raphson algorithm. During training, the machine-learning model is trained to provide a good warm-start solution (e.g., that reduces the number of iterations required for the non-linear iterative algorithm to converge), as opposed to a good final solution. Embodiments utilize machine learning to reduce computational time, while maintaining or improving accuracy, and also providing a final solution that is interpretable, trustworthy, and robust against changes in network topology and operating conditions.

**FIG. 1**

EP 4 528 587 A1

## Description

## BACKGROUND

Field of the Invention

The embodiments described herein are generally directed to machine learning, and, more particularly, to training an integrated model, comprising a machine-learning model, such as a graph neural network (GNN), and a non-linear iterative algorithm, such as the Newton-Raphson (NR) algorithm, to be used, for example, for power-flow analysis in a power system.

Description of the Related Art

Electric power grids are some of the most complex systems designed by humans. This complexity stems from the large number of interacting components and the strict requirements on power balance, while also having to satisfy applicable physical, environmental, and economic constraints. Power-flow analysis is required by the operators of power systems to ensure stable operation of the power system. Power-flow analysis is formulated as obtaining the solution to a power-flow problem, which is defined by a system of non-linear algebraic equations. The primary goal of steady-state power-flow analysis is to determine the voltage magnitudes and angles at nodes (i.e., buses) within the power system. From these parameters, the currents and active and reactive power flows in the branches between the nodes, under specified loading conditions, can be obtained.

Numerous methods and their approximations are utilized for solving the power-flow problem. The most common one is the Newton-Raphson (NR) method, which is an iterative method that solves sparse linear equations defined by the Jacobian matrix of power error. The NR method is widely used, owing to its effectiveness and reliability towards fast convergence and accuracy. However, the convergence of the NR method is not always guaranteed, especially if the initial starting solution and/or the subsequent iterations result in the Jacobian matrix becoming illconditioned. Furthermore, solving a sparse system of linear equations cannot be effectively parallelized, especially for large-scale networks. Also, for such large-scale networks, convergence to the final solution may require a significant amount of time and substantial computational resources.

With the rapidly changing structure of power systems, increased penetration of renewable energy, increasing demand due to rapid electrification, and threats from high-impact low-frequency (HILF) events, the traditional NR-based approaches to power-flow analysis have been pushed to their practical limits in terms of scalability and optimality. To address the uncertainty from renewable-energy-based resources and the increasing threat from HILF events, the power-flow problem will need to be solved more frequently. In addition, for reliability and resiliency, the power-flow problem will need to be repeatedly calculated for different possible contingency cases.

The above-mentioned challenges will limit the utilization of existing approaches for power-flow analysis. Thus, it is critical to develop advanced methods for solving the power-flow problem in a computationally fast and efficient manner.

## SUMMARY

Accordingly, systems, methods, and non-transitory computer-readable media are disclosed for an integrated model, comprising a machine-learning model and non-linear iterative algorithm, that can be used to solve the power-flow problem and similar problems in a computationally fast and efficient manner.

In an embodiment, a method comprises using at least one hardware processor to: acquire a training dataset comprising a plurality of records, wherein each of the plurality of records comprises one or more features labeled with a target solution; and train an artificial neural network to provide a warm-start solution for a non-linear iterative algorithm by, for each of the plurality of records, applying the artificial neural network to the one or more features in the record to produce a first solution, executing the non-linear iterative algorithm, using the first solution as a starting solution, to produce a second solution, and updating the artificial neural network based on a difference between the second solution and the target solution in the record.

The artificial neural network may be a graph neural network. The graph neural network may be a message-passing neural network. Each of the plurality of records may comprise a nodal tensor that includes the one or more features for each of a plurality of nodes in a graph. Training the artificial neural network may further comprise, for each of the plurality of records: generating an adjacency matrix that represents a plurality of edges between the plurality of nodes, wherein any edges that are in a contingency state are not represented in the adjacency matrix; and providing the adjacency matrix to the graph neural network. The first solution may represent the warm-start solution for the non-linear iterative algorithm, the second solution may represent a state of a power system, and the graph may represent the power system. The one or more features may comprise one or more of nodal active power demand, nodal reactive power demand, node type, voltage magnitude setpoint, or voltage angle setpoint, and wherein each of the first solution and the second solution comprises a voltage magnitude and a voltage angle for each of the plurality of nodes. The method may further comprise using the at least one hardware processor to: deploy the graph neural network to output the first solution comprising the voltage magnitude and the voltage angle for each of the plurality of nodes; deploy the non-linear iterative algorithm to use the first solution as a starting solution to produce the second solution comprising the voltage magnitude and the voltage angle for each of the plurality of nodes; determine power flow in electrical lines within the power system based on the voltage magnitudes and the voltage angles of the plurality of nodes; and adjust a configuration of the power system based on the determined power flow. Adjusting the configuration may comprise one or more of controlling an amount of power injected by at least one generator in the power system, adjusting an amount of power supplied to a load in the power system, or adjusting a voltage setpoint in the power system.

The non-linear iterative algorithm may be a Newton-Raphson algorithm. An inverse of a Jacobian matrix in the Newton-Raphson algorithm may be fixed after a first iteration of the Newton-Raphson algorithm.

The artificial neural network may be updated based on the difference between the second solution and the target solution and a difference between the first solution and the target solution. The artificial neural network may be updated based upon a weighted combination of a first loss function, based on the difference between the first solution and the target solution, and a second loss function, based on the difference between the second solution and the target solution.

The artificial neural network may be updated using reinforcement learning in which a reward is based upon the difference between the second solution and the target solution. The reward may be calculated based on a loss function that calculates a loss based on the difference between the second solution and the target solution. The reinforcement learning may utilize a proximal policy optimization algorithm.

The method may further comprise constraining a number of iterations of the non-linear iterative algorithm. The number of iterations may be constrained to be less than or equal to a percentage (e.g., 50%) of an average number of iterations required for the non-linear iterative algorithm to converge.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processorbased system, such as a server, and/or in executable instructions stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example data flow for managing a target system, according to an embodiment;
FIG. 4 illustrates a Newton-Raphson algorithm, according to an embodiment;
FIGS. 5A and 5B illustrate the training of an integrated model, comprising both a machine-learning model and a non-linear iterative algorithm, according to alternative embodiments;
FIG. 6 illustrates an example of a Proximal Policy Optimization (PPO) algorithm, according to an embodiment; and
FIG. 7 illustrates a training process and an operating process for an integrated model, according to an embodiment.

## DETAILED DESCRIPTION

In an embodiment, systems, methods, and non-transitory computer-readable media are disclosed for an integrated model, which comprises both a machine-learning model and a non-linear iterative algorithm. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

## 1. Infrastructure

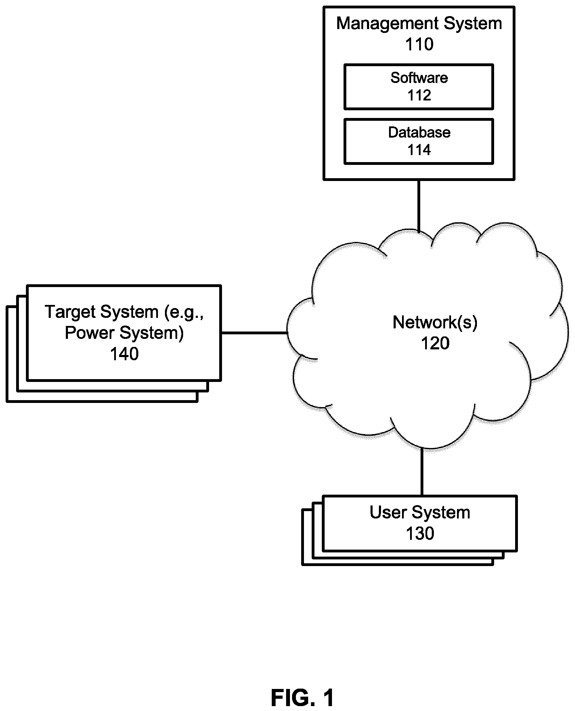

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected to one or more user systems 130 and/or target systems 140 via one or more networks 120.

Network(s) 120 may comprise the Internet, and management system 110 may communicate with user system(s) 130 and/or target system(s) 140 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), Internet Control Center Communications Protocol (ICCP) International Electrotechnical Commission (IEC) 61850, and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130 and/or target systems 140 via the Internet, but may be connected to one or more other user systems 130 and/or target systems 140 via an intranet. Furthermore, while only a few user systems 130 and target systems 140, one instance of software 112, and one database 114 are illustrated, it should be understood that the infrastructure may comprise any number of user systems, power systems, software instances, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system 140 may comprise any type of system for which data are monitored, analyzed, and acted upon. In general, target system 140 may comprise any system that can be represented by a system of equations that are solvable using a non-linear iterative algorithm. However, in the context of specific, non-limiting examples that are provided throughout the present disclosure, it will be assumed that target system 140 comprises or consists of a power system. A power system may comprise one or more, and generally a plurality of, power resources connected in a network, which may comprise a power distribution network, a power transmission network, and/or the like. The power resources may comprise power generators, energy storage systems, loads (e.g., rechargeable energy storage system or other controllable load, noncontrollable load, etc.), and/or the like. The power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Each power resource may be subject to complex technical constraints and/or business constraints, such as a minimum up-time, a maximum down-time, a ramp-up and/or ramp-down rate, a modulation or stability (e.g., a power generator may not change its production level too many times or at too fast of a rate), a start-up and/or shut-down ramp rate (e.g., when starting or stopping, a power generator or load must follow a specific power curve, which may depend on how long the unit has been offline or online), and/or the like. In addition, the network, which may span a geographic region, may have complex characteristics, such as network topology, device equipment parameters, line flow limits, resource response rates, and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL™, Oracle™, IBM™, Microsoft SQL™, Access™, PostgreSQL™, MongoDB™, and/or the like, and including cloud-based databases, proprietary databases, and unstructured databases.

2. Example Processing Device

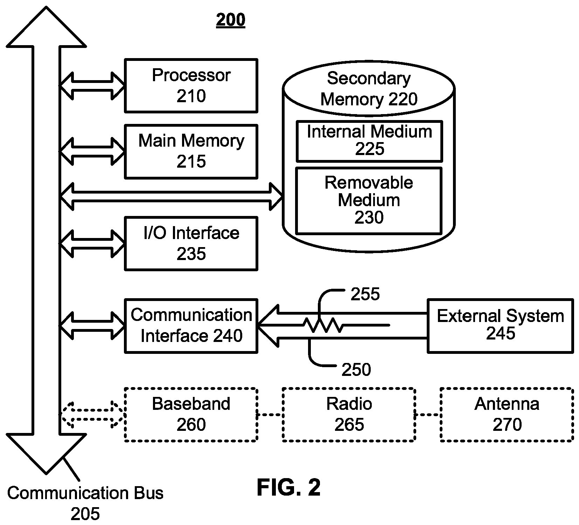

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112) described herein, and may represent components of management system 110, user system(s) 130, target system(s) 140, and/or other processing devices described herein. System 200 can be a server or any conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digitalsignal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, lightemitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 firewire, and any other device capable of interfacing system 200 with a network (e.g., network(s) 120) or another computing device. Communication interface 240 preferably implements industrypromulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as software 112) is stored in main memory 215 and/or secondary memory 220. Computer programs can also be received via communication interface 240 and stored in main memory 215 and/or secondary memory 220. Such computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245 (e.g., a network information server or other network device). These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

3. Example Data Flow for Target System Management

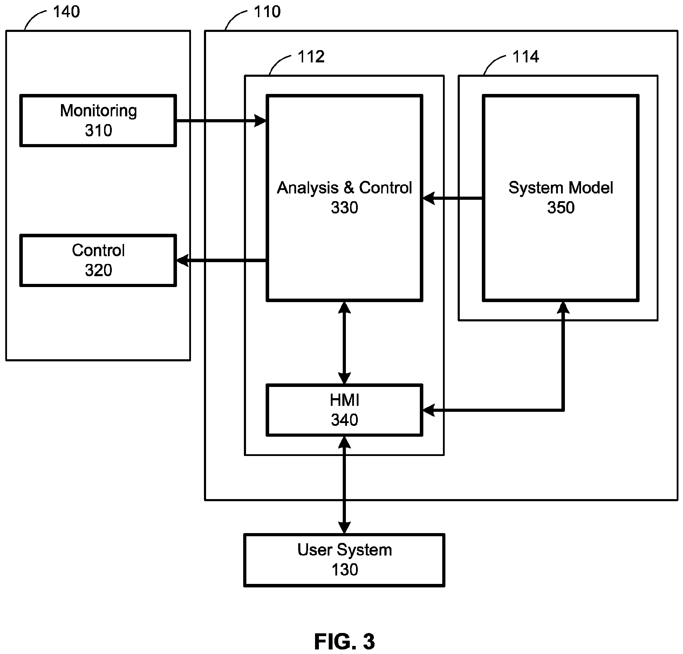

FIG. 3 illustrates an example data flow between a management system 110, a user system 130, and a target system 140, according to an embodiment. Target system 140 may comprise a monitoring module 310 and a control module 320. Software 112 of management system 110 may comprise an analysis and control module 330, and a human-to-machine interface (HMI) 340. Database 114 of management system 110 may store a system model 350. It should be understood that communications between the various systems may be performed via network(s) 120. In addition, communications between a pair of modules may be performed via an application programming interface (API) provided by one of the modules or by other inter-process communication means.

Monitoring module 310 may monitor and collect data that are output by one or more sensors in target system 140 (e.g., sensors in the network of a power system). Monitoring module 310 may also derive data from the collected data. Monitoring module 310 may transmit or "push" the collected and/or derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power system) or other points within a network of target system 140. The system telemetry may be communicated from monitoring module 310 to analysis and control module 330 in real time, as data are collected and/or derived, or periodically. As used herein, the term "real time" includes events that occur simultaneously, as well as events that are separated in time by ordinary delays resulting from latencies in processing, memory access, communications, and/or the like.

Analysis and control module 330 receives the system telemetry from monitoring module 310, and uses the system telemetry in conjunction with system model 350 to determine a configuration for target system 140 (e.g., one or more resources in a power system), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding time window), or in response to a user operation. Analysis and control module 330 may control target system 140 automatically (e.g., without any user intervention), semi-automatically (e.g., requiring user approval or confirmation), and/or in response to manual user inputs.

Analysis and control module 330 may perform one or more types of analysis, such as power-flow analysis, optimal power flow, distributed energy resource (DER) management, situational awareness about the network, contingency analysis, security analysis, Volt-Var optimization, loadability analysis, and/or the like. The analysis may be performed in response to a user operation, or automatically in real time or periodically. In some cases, the analysis may be provided to a user via human-to-machine interface 340. In other cases, analysis and control module 330 may, automatically (i.e., without user intervention) or semi-automatically (e.g., with user approval or confirmation), initiate a control operation based on the analysis. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. Examples of such control include, in the context of a power system, setting a setpoint (e.g., active and/or reactive power for power generators, voltage, etc.), adjusting the power output of a power generator, adjusting the charging or discharging of an energy storage system, adjusting the power input to a load, closing or opening a switch (e.g., circuit breaker), and/or the like.

Human-to-machine interface 340 may generate a graphical user interface that is transmitted to user system 130 and receive inputs to the graphical user interface via user system 130. The graphical user interface may provide information regarding the current state of target system 140 determined from the system telemetry, a predicted state of target system 140 determined by analysis and control module 330, a configuration of target system 140 determined by analysis and control module 330, a control decision or recommendation for target system 140 determined by analysis and control module 330, a visual representation of system model 350, and/or the like. In addition, the graphical user interface may provide inputs that enable a user of user system 130 to configure settings of analysis and control module 330, configure system model 350, specify or approve controls to be transmitted to control module 320 of target system 140, analyze target system 140, and/or the like.

System model 350 may be stored in database 114 and accessed by modules, such as analysis and control module 330, via any known means (e.g., via an API of database 114, a direct query of database 114, etc.). Database 114 may store a system model 350 for each target system 140 that is managed by management system 110. Each system model 350 may model target system 140 in any suitable manner. For example, system model 350 may comprise a single-line diagram representing the components of the network and their relationships to each other, a system of equations, an adjacency matrix, and/or the like. It should be understood that system model 350 may be implemented as a data structure that is capable of being automatically analyzed by software modules, including analysis and control module 330.

4. Introduction

In recent literature, machine-learning (ML) approaches have been developed to solve the power-flow problem. These approaches either use a machine-learning model to obtain the power-flow solution in a single-shot manner or use a machine-learning model to produce a warm-start solution to warm-start an NR algorithm.

Single-shot machine-learning prediction has been shown to be accurate and successful for power-flow analysis in some cases. However, in other cases, single-shot machine-learning prediction can be very inaccurate. Thus, there is not yet sufficient confidence that single-shot machine-learning prediction can be relied upon for critical applications, such as the operation and control of a power system.

The warm-start approach uses a previously solved power-flow solution or a flat-start value as the starting solution for an NR algorithm. The flat-start value assumes that all nodal voltage magnitudes have a value of one per unit and all voltage angles have a value of zero radians. However, this approach may not always converge. In addition, even when this approach does converge, it may require many iterations to reach convergence. It should be understood that, as the number of iterations increases, the computational time also increases.

In an ML-based warm-start approach, a machine-learning model may be used to generate a single-shot prediction that is then used to warm-start a non-linear iterative algorithm, such as the NR algorithm. To do this, the machine-learning model would typically be trained to minimize the prediction error with respect to the final power-flow solution. However, this might not always be the best strategy.

Thus, in an embodiment, a machine-learning model is trained to generate a warm-start solution in a manner that will benefit the NR algorithm from the perspective of reducing the number of iterations required to reach convergence. In particular, the machine-learning model is trained based on the impact of its warm-start solution on the NR algorithm. This is contrast to an approach that simply trains the machine-learning model to minimize prediction error, while being agnostic to how the NR algorithm will perform when using the machine-learning model's solutions as a starting solution. Such an approach assumes that the NR algorithm will converge fast if the starting solution is close to the actual solution. However, such an approach does not guarantee convergence, let alone fast convergence, since it is possible that the NR algorithm's solution will diverge from the starting solution.

In addition, the disclosed embodiments combine the benefits of ML-based approaches with the solution confidence provided by a traditional NR algorithm. In other words, since the final solution to the power-flow analysis will be delivered using an NR algorithm, which is well understood and interpretable, users will have confidence in the final solution. This enables the disclosed embodiments to be easily incorporated into existing management systems 110. This is in contrast to solutions delivered by pure machine-learning models, which are difficult to interpret, and which are effectively black boxes to operators of target systems 140. In addition, the enhanced warm start for the NR algorithm will increase computational efficiency, while maintaining or even increasing accuracy and robustness.

Furthermore, because the NR algorithm provides the final solution, there is no need to retrain the machine-learning model whenever the network topology and/or operating conditions of target system 140 change. In particular, the utilization of the machine-learning model's solution as a warm-start solution to the NR algorithm, which is then responsible for providing the final solution, relieves the machine-learning model of the burden of having to provide an accurate final solution. In effect, the NR algorithm acts as a guardrail to ensure that the final solution is of good quality, thereby reducing the frequency by which the machine-learning model must be retrained, which in turn, reduces the computational expense of maintaining the machine-learning model. This is contrast to an approach that only utilizes the machine-learning model to produce the final solution. In such an approach, the machine-learning model would need to be retrained whenever the network topology or operating conditions of target system 140 change.

Embodiments are generally contemplated to utilize an NR algorithm. However, any other algorithm that may be benefit from a warm-start solution may be used instead of an NR algorithm, such as a Gauss-Seidel algorithm, a fast-decoupled-load-flow algorithm, backwardforward sweep (BFS) algorithm, a Laurent Power Flow (LPF) algorithm, an optimization-based analysis with a non-linear formulation, such as Interior Point Optimization, another root-finding algorithm, or the like. It should be understood that any algorithm that is initialized with a starting solution may benefit from a warm-start solution. Accordingly, the algorithm to which the warm-start solution is provided will generally be described herein as a "non-linear iterative algorithm," except when discussing something specific to a particular type of non-linear iterative algorithm, such as the NR algorithm. It should be understood that a warm-start solution is not unique to the NR algorithm, and that other non-linear iterative algorithms are also capable of utilizing a warm-start solution.

In addition, embodiments will primarily be described herein in the context of power-flow analysis for a power system. However, it should be understood that embodiments may be applied to other types of analysis for a power system, as well as analysis for other types of systems. Accordingly, the system being managed by the disclosed embodiments will generally be described herein as a "target system," except when discussing a particular application for a power system. In general, any system which can be analyzed by a non-linear iterative algorithm, such as the NR algorithm, that is initialized with a starting solution may benefit from disclosed embodiments.

5. <u>Power-Flow Problem</u>

Although power-flow analysis is not the only application of the disclosed embodiments, power-flow analysis represents a significant application of the disclosed embodiments. Therefore, the power-flow problem will be briefly described. In this context, it should be understood that target system 140 is a power system.

Let $\mathcal{N}$ be the number of buses in the network of the power system, $\varepsilon$ be the number of edges in the network of the power system, and $\mathcal{G}$ be the number of generators in the network of the power system, with

$$\mathcal{G} \in \mathcal{N}.$$

Each $n \in \mathcal{N}$ has the following parameters, in which "net" refers to the difference between load and generation:

$P_n$:  active (net) power demand of bus $n$, with $P_n \in \mathbb{R}$ ;

$Q_n$:  reactive (net) power demand of bus $n$, with $Q_n \in \mathbb{R}$ ;

$V_n$:  voltage of bus $n$, with $V_n \in \mathbb{C}$ and $V_n = V_n^{Magnitude} \angle V_n^{Angle}$ , wherein $V_n^{Magnitude}$ is the voltage magnitude and $V_n^{Angle}$ is the voltage angle; and

$Y$:  admittance matrix of the network ( $Y \in \mathbb{C}^{|\mathcal{N}| \times |\mathcal{N}|}$ ).

The goal of power-flow analysis is to calculate the complex steady-state bus voltages ($V_n$), given information about the active power net demand ($P_n$), reactive power net demand ($Q_n$), and admittance matrix ($Y$), using Kirchhoff's laws. Thus, the following power equations are solved to compute $V_n$ for all $n \in \mathcal{N}$ :

Equation (1):

$$P_n = \mathrm{Re}(V_n) \sum_{i=1}^{|\mathcal{N}|} (\mathrm{Re}(Y_{ni})\mathrm{Re}(V_i) - \mathrm{Im}(Y_{ni})\mathrm{Im}(V_i))$$

$$+ \mathrm{Im}(V_n) \sum_{i=1}^{|\mathcal{N}|} (\mathrm{Im}(Y_{ni})\mathrm{Re}(V_i) + \mathrm{Re}(Y_{ni})\mathrm{Im}(V_i))$$

Equation (2):

$$Q_n = \mathrm{Re}(V_n) \sum_{i=1}^{|\mathcal{N}|} (-\mathrm{Im}(Y_{ni})\mathrm{Re}(V_i) - \mathrm{Re}(Y_{ni})\mathrm{Im}(V_i))$$

$$+ \mathrm{Im}(V_n) \sum_{i=1}^{|\mathcal{N}|} (\mathrm{Re}(Y_{ni})\mathrm{Re}(V_i) - \mathrm{Im}(Y_{ni})\mathrm{Im}(V_i))$$

wherein $\mathrm{Re}(\cdot)$ is the real part of the input parameter, and $\mathrm{Im}(\cdot)$ is the imaginary part of the input parameter. Equations (1) and (2) for all $n \in \mathcal{N}$ form a system of non-linear equations that is highly sparse in nature.

6. Newton-Raphson Algorithm

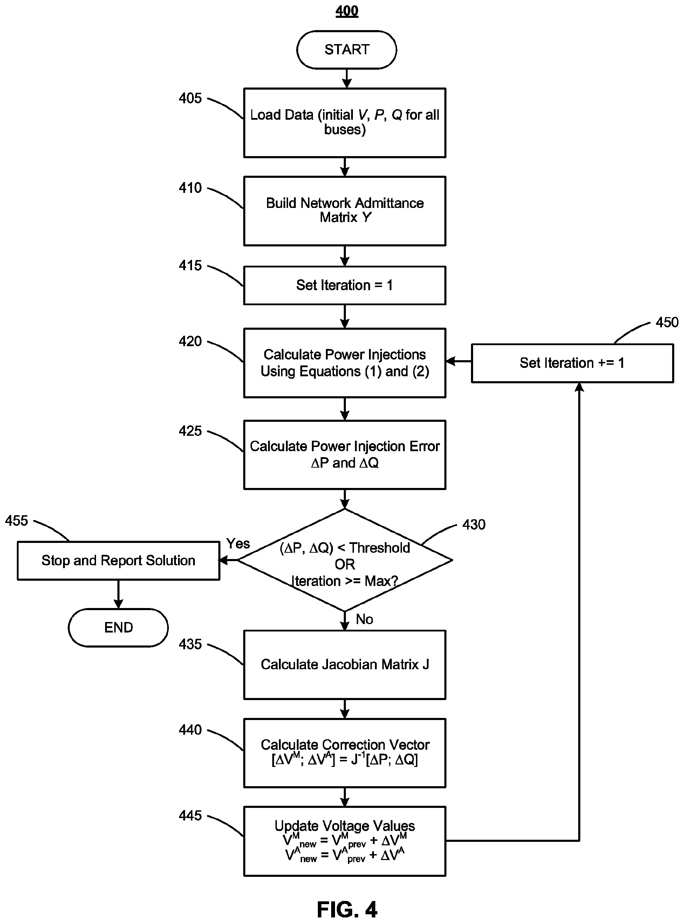

FIG. 4 illustrates the Newton-Raphson (NR) algorithm for power-flow analysis, according to an embodiment. NR algorithm 400 may be implemented by software 112. While NR algorithm 400 is illustrated with a certain arrangement and ordering of subprocesses, NR algorithm 400 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order. Furthermore, while the illustrated example of NR algorithm 400 is specific to power-flow analysis, it should be understood that NR algorithm 400 can be adapted to other contexts by utilizing different data and equations.

While NR algorithm 400 is not the only example of a non-linear iterative algorithm, NR algorithm 400 is a classical and stable approach to solving Equations (1) and (2). NR algorithm 400 is a root-finding algorithm that iteratively produces better approximations of the roots of a function. In the context of power-flow analysis, this function comprise Equations (1) and (2). NR algorithm 400 starts with these equations and a starting solution that represents an initial guess as to the root of these equations. NR algorithm 400 then iteratively searches for the final solution in a region of the solution space around the starting solution. This means that a good starting solution is critical to the performance of NR algorithm 400.

In subprocess 405, the initial data are loaded. In the context of power-flow analysis, the initial data comprise the voltages (V, comprising $V^{magnitude}$ and $V^{angle}$), active power net demands (P), and reactive power net demands (Q) for all buses in the network of the power system. It should be understood that the initial data may comprise other data, such as the impedance of the branches between nodes in the network, information on the type of each node in the network (e.g., whether the node is a load bus (PQ node), generator bus (PV node), or slack bus). In addition, it should be understood that, in other contexts, other initial data are loaded. In any case, this initial data comprise the starting solution to the problem being solved (e.g., the power-flow problem). Traditionally, this starting solution may be a fixed set of values. A standard starting solution that is commonly used for power-flow analysis is the flat starting solution, in which the voltage magnitude $V^{magnitude}$) is set to one per unit for every non-PV bus (i.e., a bus that does not have a generator that is regulating the terminal voltage to a voltage setpoint) and the voltage angle ($V^{angle}$) is set to zero radians for every bus.

In subprocess 410, the admittance matrix (Y) of the network of the power system is built. The admittance matrix (Y) may be built in any suitable manner. For example, the admittance matrix (Y) may be built using the voltages of the nodes and the currents between the nodes.

In subprocess 415, the count of iterations is initialized. For ease of understanding, the iteration count is initialized to one. However, it should be understood that, programmatically, the iteration count may be initialized to zero or another value.

In subprocess 420, the power injections at the nodes in the network are calculated. The power injections may be calculated using Equations (1) and (2) in the power-flow problem. In particular, the active power net demand ($P_n$) and reactive power net demand ($Q_n$) may be calculated for each node $n \in \mathcal{N}$, based on the voltages (V) and the admittance matrix (Y).

In subprocess 425, the error ($\Delta P$), between the active power net demand in the current solution and the known active power net demand, and the error ($\Delta Q$), between the reactive power net demand in the current solution and the known reactive power net demand, are calculated. These errors represent the error ($\Delta P, \Delta Q$) in the calculated power injection.

In subprocess 430, it is determined whether the calculated error ($\Delta P, \Delta Q$) is less than a predefined threshold or if the count of iterations has reached a maximum number of iterations. The predefined threshold represents a tolerance, within which NR algorithm 400 has reached convergence. In other words, when the error is within the tolerance, NR algorithm 400 has converged on a solution. The maximum number of iterations represents a computational budget allocated to NR algorithm 400. When NR algorithm 400 has neither converged nor reached the computational budget (i.e., "No" in subprocess 430), NR algorithm 400 proceeds to subprocess 435. Otherwise, when NR algorithm 400 has either converged or reached the computational budget (i.e., "Yes" in subprocess 430), NR algorithm 400 is stopped and the most recent solution is reported in subprocess 455.

In subprocess 435, the Jacobian matrix (J) of the calculated error is calculated. The Jacobian matrix (J) may be calculated in any suitable manner, and is generally not computationally expensive.

In subprocess 440, a correction vector ($\Delta V^{Magnitude}, \Delta V^{Angle}$) is calculated from the inverse ($J^{-1}$) of the Jacobian matrix (J) that was calculated in subprocess 435. This requires inversion of the Jacobian matrix (J). As the size of the network increases, the size of the Jacobian matrix (J) increases and the Jacobian matrix (J) becomes sparse. This can render the Jacobian matrix (J) non-invertible. At the very least, a large-dimensional Jacobian matrix is computationally expensive to invert. The number of iterations, and therefore, the number of times that the Jacobian matrix (J) needs to be inverted in iterations of subprocess 440, depends on the quality of the starting solution. Thus, a high-quality starting solution that reduces the number of iterations of NR algorithm 400, even by one iteration, can significantly reduce the computational time and expense for finding a final solution for large networks, such as the network of a typical power system.

In subprocess 445, the voltage values ($V^{Magnitude}, V^{Angle}$) in the solution are corrected using the correction vector, calculated in subprocess 440. In particular, the correction vector is added to the previous solution to produce a new solution. For example, the correction vector ($\Delta V^{Magnitude}$) for voltage magnitude is added to the voltage magnitude ($V_{prev}^{Magnitude}$) in the previous solution to produce a new voltage magnitude ($V_{new}^{Magnitude}$), and the correction vector ($\Delta V^{Angle}$) for voltage angle is added to the voltage angle ($V_{prev}^{Angle}$) in the previous solution to produce a new voltage angle

$$\left( V_{new}^{Angle} \right).$$

In subprocess 450, the count of iterations is incremented. Then, NR algorithm 400 returns to subprocess 420 to perform another iteration. It should be understood that these iterations will continue until either NR algorithm 400 converges or the computational budget for NR algorithm 400 is reached.

Notably, the performance of NR algorithm 400, in terms of both speed and accuracy, depends on the size of the network for which the power-flow problem is being solved, and the quality of the starting solution. For example, the flat starting solution does not always converge. In addition, as the number of iterations required for convergence increases, the computational time for NR algorithm 400 to converge also increases.

7. <u>Machine-Learning Model</u>

In an embodiment, instead of using the flat starting solution or other fixed starting solution for the non-linear iterative algorithm (e.g., NR algorithm 400), a machine-learning model is used to provide a warm-start solution to be used as the starting solution for the non-linear iterative algorithm. The machine-learning model may be an artificial neural network.

The network of a power system is representable as a graph, in which the nodes represent power generators and loads, and the edges between the nodes represent power lines (e.g., transmission or distribution lines). While a traditional convolutional neural network (CNN) is suitable for time-series prediction, regression, and classification, a convolutional neural network does not generally perform well on graph-based data, such as a network in a power system, since the ordering of the graph cannot be represented. In other words, a convolutional neural network cannot account for the dependencies between nodes.

Thus, for a target system 140 that comprises a network of nodes, representable as a graph, such as a power system, the artificial neural network of the machine-learning model may comprise a graph neural network (GNN). Graph neural networks are a class of artificial neural networks that process data that are represented in the form of a graph. Graph neural networks can be directly applied to graph-structured data to make node-level, edge-level, or graph-level predictions. An example of graph neural networks is described in "The Graph Neural Network Model," by F. Scarselli et al., IEEE Transactions on Neural Networks, pp. 61-80, 2009, which is hereby incorporated herein by reference as if set forth in full. Graph neural networks are especially suitable for networks, such as an electrical network. However, it should be understood that the artificial neural network may comprise or consist of another type of neural network, such as a convolutional neural network, recurrent neural network (RNN), or the like.

While target system 140 is primarily exemplified herein as a power system, it should be understood that target system 140 may be any system that can be represented as a graph with nodes and edges. For example, target system 140 may comprise a network of connected components. In a power system, these components represent resources connected by electrical lines. In a gas pipeline, the components represent equipment (e.g., gas compressors, pumps, storage tanks, etc.) connected by gas pipes. In a computing system, these components may represent computational resources connected by communication paths. In a geographic system, these components may represent locations connected by roads. It should be understood that these are just several examples. Any network can be converted into a graph that comprises the components as nodes and the connections between the components as edges.

A message-passing neural network (MPNN) is a special class of graph neural networks. In a message-passing neural network, information between the different parts of the neural network is propagated in a scalable manner, by iteratively updating a representation of each node based on an aggregation function that aggregates information from the node and nearby nodes. A message-passing neural network is especially suitable for making power-flow predictions for an electrical network. An example of a message-passing neural network is described in "Neural Message Passing for Quantum Chemistry," by J. Gilmer et al., arXiv:1704.01212, pp. 1-14, April 2017, which is hereby incorporated herein by reference as if set forth in full.

The inputs to the message-passing neural network or other graph neural network may comprise one or more input features for each of the plurality of nodes in the graph, as well as an adjacency matrix representing the adjacencies of the plurality of nodes in the graph. The adjacency matrix provides awareness of the network topology to the graph neural network. The output of the graph neural network may comprise one or more output parameters for each of the plurality of nodes in the graph. For example, in the context of power-flow analysis, the input and output features of the graph neural network (e.g., message-passing neural network) may be:

Input Features

| Feature Name | Encoding Type (if any) | Dimensions |
|---|---|---|
| Active power net demand | N/A | $\lvert \mathcal{N} \rvert \times 1$ |
| Reactive power net demand | N/A | $\lvert \mathcal{N} \rvert \times 1$ |
| Node type (PV, PQ, slack) | One-hot encoded | $\lvert \mathcal{N} \rvert \times 3$ |
| PV node reference voltage magnitude | $V^{Magnitude}$ for PV nodes, 0 for others | $\lvert \mathcal{N} \rvert \times 1$ |
| Slack node reference voltage magnitude | $V^{Magnitude}$ for slack nodes, 0 for others | $\lvert \mathcal{N} \rvert \times 1$ |
| Slack node reference voltage angle | $V^{Angle}$ for slack nodes, 0 for others | $\lvert \mathcal{N} \rvert \times 1$ |

Output Features

| Feature Name | Encoding Type (if any) | Dimensions |
|---|---|---|
| Voltage magnitude | N/A | $\lvert \mathcal{N} \rvert \times 1$ |
| Voltage angle | $\sin(V^{Angle})$ | $\lvert \mathcal{N} \rvert \times 1$ |
| Voltage angle | $\cos(V^{Angle})$ | $\lvert \mathcal{N} \rvert \times 1$ |

In the above inputs, the node type may be one of a PV node, a PQ node, or a slack node, which may be encoded in an indicator vector. A PV node is a bus that has a power generator which is regulating the terminal voltage to a voltage setpoint. Thus, a PV node will have a PV reference voltage magnitude ($V^{Magnitude}$) equal to the voltage setpoint. A PQ node is a bus that has no voltage control devices (e.g., no power generators) and is not remotely controlled by a voltage control device. A slack node is a bus in an electrical island with a fixed voltage magnitude and a fixed voltage angle. Thus, a slack node will have a slack reference voltage magnitude ($V^{Magnitude}$) equal to the fixed voltage magnitude and a slack reference voltage angle ($V^{Angle}$) equal to the fixed voltage angle.

In the above outputs, the sine and cosine values of the voltage angle ($V^{Angle}$) are output, instead of the voltage angle ($V^{Angle}$) itself. This enables quadrant behaviors of the voltage angle ($V^{Angle}$) to be captured.

8. Integration of Machine-Learning Model with Non-Linear Iterative Algorithm

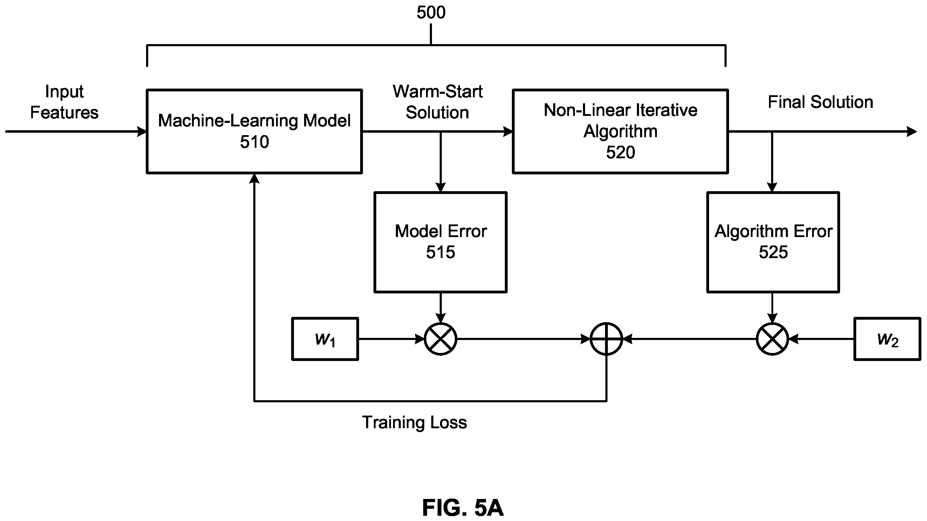

FIG. 5A illustrates the training of an integrated model 500, comprising both a machine-learning model 510 and a non-linear iterative algorithm 520, according to a first embodiment. In an embodiment, the training of machine-learning model 510 includes the output of non-linear iterative algorithm 520, such that machine-learning model 510 is trained to output a good warm-start solution, as opposed to a good final solution, in order to improve the convergence of non-linear iterative algorithm 520. As discussed elsewhere herein, machine-learning model 510 may be a graph neural network, such as a message-passing neural network, but could also be another type of artificial neural network or another type of artificial intelligence altogether. In addition, non-linear iterative algorithm 520 may be Newton-Raphson algorithm 400, but could also be another type of algorithm that utilizes a starting solution.

For training, a training dataset is acquired. The training dataset may comprise a plurality of records. Each of the plurality of records may comprise one or more input features for each of a plurality of nodes, labeled with a target solution, comprising target output features for each of the plurality of nodes. In the context of power-flow analysis, these input features may comprise, for each node in the graph, active power demand, reactive power demand, node type (e.g., PV, PQ, or slack), PV reference voltage for PV nodes, and/or slack reference voltage magnitude and angle for slack nodes. In this case, the target solution may comprise, for each node in the graph, the voltage magnitude and voltage angle. Each of the plurality of records may be normalized and formatted according to the requirements of machine-learning model 510.

In the event that machine-learning model 510 comprises a graph neural network, such as a message-passing neural network, each of the plurality of records may also comprise an adjacency matrix, which represents the edges between nodes. In the context of power-flow analysis, the adjacency matrix may be weighted, such that each edge is represented by the admittance value on the electrical line between the corresponding pair of nodes.

During training, each of the plurality of records in the training dataset is input to machine-learning model 510 to produce a warm-start solution. In the context of power-flow analysis, the output of machine-learning model 510 will comprise voltage predictions (e.g., including voltage magnitude and angle) for each node in the graph, represented in the record. This output may be denormalized into a warm-start solution that is compatible with non-linear iterative algorithm 520.

In addition, for each of the plurality of records in the training dataset, the warm-start solution that is produced from machine-learning model 510 is input to non-linear iterative algorithm 520. In other words, non-linear iterative algorithm 520 is executed using the warm-start solution as the starting solution, to produce a final solution. For example, non-linear iterative algorithm 520 may iterate until either the solution converges, or a computational budget is reached. The output of non-linear iterative algorithm 520 may be normalized as needed to produce the final solution.

For each of the plurality of records in the training dataset, the model error 515 is calculated based on the difference between the warm-start solution and the target solution. Similarly, the algorithm error 525 is calculated based on the difference between the final solution and the target solution. Algorithm error 525 quantifies the quality of the warm-start solution, predicted by machine-learning model 510, and used as the starting solution for non-linear iterative algorithm 520. Each of the model error 515 and algorithm error 525 may be calculated using any suitable loss function. For example, the loss function may utilize mean squared error (MSE), root mean squared error (RMSE), mean absolute error (MAE), or the like.

Model error 515 and algorithm error 525 may be combined to produce a composite training loss that is used to update the parameters (e.g., weights) of machine-learning model 510 via backpropagation. In particular, machine-learning model 510 may be updated iteratively in a training loop after each execution of integrated model 500 on one of the plurality of records in the training dataset, to minimize the composite training loss. Model error 515 and algorithm error 525 may be combined according to a weight $w_1$ for model error 515 and weight $w_2$ for algorithm error 525, where $w_1 + w_2 = 1$. In particular, each weight may represent the contribution of the respective error to the composite training loss. Thus, model error 515 may be multiplied by weight $w_1$, algorithm error 525 may be multiplied by weight $w_2$, and the products may be summed to produce the composite training loss. At one extreme, a weighting $(w_1, w_2) = (1,0)$ will train machine-learning model 510 to predict more accurate single-shot solutions. At the other extreme, a weighting $(w_1, w_2) = (0,1)$ will train machine-learning model 510 to predict more accurate warm-shot solutions. A weighting $(w_1, w_2) = (0.5, 0.5)$ will strike an exact balance between these two extremes. The weights $w_1$ and $w_2$ may be predefined or may be updated heuristically, based on the performance of machine-learning model 510 during training, to define the training priority of machine-learning model 510. For example, a user may adjust these weights as desired to customize the training priority of machine-learning model 510.

Algorithm 1 below represents pseudocode for the training of machine-learning model 510, according to the first embodiment:

Algorithm 1

1:     Input:      Training data $(X_{Train}, Y_{Train})$
                           Training epochs $(n_{epoch})$
                           Mini-batch count $(n_{batch})$
                           Non-linear iterative algorithm $(NLIA(x))$
                           Loss weights $w_1, w_2$

2:     Output:     Trained ML model $(M_\theta)$

3:     Normalize training data $(X_{Train}^{Norm}, Y_{Train}^{Norm})$

4:     Organize the data in $n_{batch}$ mini-batches.

5:     while $e \leq n_{epoch}$ do

6:       while $b \leq n_{batch}$ do

7:           Sample mini-batch $b$ from training data $(X_{Train}^{Norm}, Y_{Train}^{Norm})$

8:           Obtain warm-start predictions $Y_{Warm}^{Norm} = M_\theta(X_{Train}^{Norm})$

9:           Compute warm-start prediction loss $L_1 = L(Y_{Warm}^{Norm}, Y_{Train}^{Norm})$

10:         Denormalize the warm-start prediction $Y_{Warm}$

11:         Compute final solution $Y_{NLIA} = NLIA(Y_{Warm})$

12:         Normalize the final solution $Y_{NLIA}^{Norm}$

13:         Compute final solution prediction loss $L_2 = L(Y_{NLIA}^{Norm}, Y_{Train}^{Norm})$

14:         Computed weighted total loss $L_{Total} = w_1 L_1 + w_2 L_2$

15:         Update $M_\theta$ using the mini-batch loss $L_{Total}$

16:         b = b+1

17:       end

18:       e = e+1

19:     return $M_\theta$

Algorithm 2 below represents pseudocode for evaluating the performance of integrated model 500 (e.g., after being trained according to Algorithm 1), according to the first embodiment:

---

**Algorithm 2**

1:     Input:      Testing data $(X_{Test})$
                           Trained ML model $(M_\theta)$
                           Non-linear iterative algorithm $(NLIA(x))$

2:     Output:     Final solution $(Y_{NLIA})$

```
3:    Normalize testing data $X_{Test}^{Norm}$

4:    for $X_{Test}^{Norm,i} \in X_{Test}^{Norm}$

5:        Obtain warm-start predictions $Y_{Warm}^{Norm,i} = M_\theta(X_{Test}^{Norm,i})$

6:        Denormalize the warm-start prediction $Y_{Warm}^i$

7:        Compute final solution $Y_{NLIA}^i = NLIA(Y_{Warm}^i)$

8:    end

9:    return $Y_{NLIA}$
```

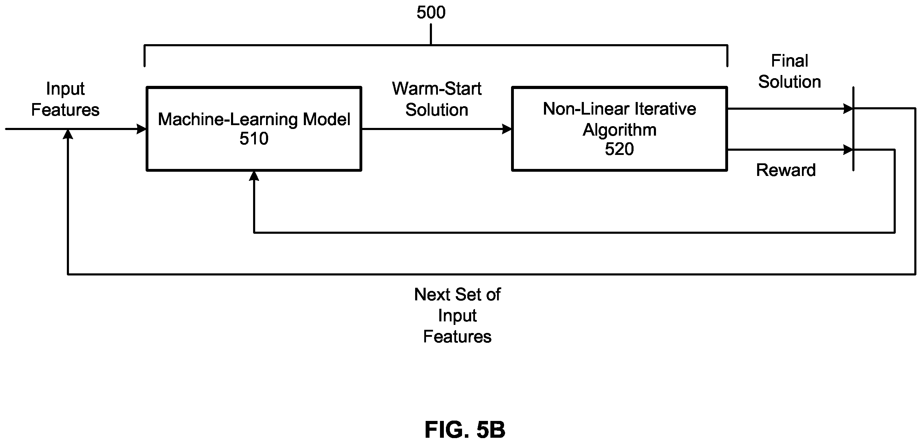

FIG. 5B illustrates the training of integrated model 500, according to a second embodiment. In some cases, it may be difficult to back-propagate the error from the loss function through non-linear iterative algorithm 520, as in the first embodiment of training. For instance, non-linear iterative algorithm 520 may be complex and non-differentiable in nature, which renders back-propagation using gradient-based methods difficult. In addition, in an existing deployment of integration model 500, it may be difficult to modify the non-linear iterative algorithm 520 to suit the needs of the first embodiment of training. In particular, it may be difficult to determine what loss function to optimize, and the loss function may not be capable of being modeled by a differentiable function that can be directly plugged into the training loop. Accordingly, the second embodiment utilizes reinforcement learning (RL).

In this second embodiment, machine-learning model 510 may be trained, as an RL agent, to take the best actions to enable non-linear iterative algorithm 520 to quickly converge to the final solution. In this case, the actions are the warm-start solutions. Non-linear iterative algorithm 520 is treated as a stochastic game environment, with a goal of converging to the final solution using the minimum number of iterations or a fixed number of iterations. The role of machine-learning model 510, as the RL agent, is to provide non-linear iterative algorithm 520, as the stochastic game environment, with a starting solution (i.e., warm-start solution) that enables the stochastic game environment to achieve its goal.

It should be understood that the training dataset that is used in the second embodiment may be identical to the training dataset described with respect to the first embodiment. Furthermore, just as in the first embodiment, each of the plurality of records in the training dataset is input to machine-learning model 510 to produce a warm-start solution, which is input to non-linear iterative algorithm 520. Then, non-linear iterative algorithm 520 iterates until the solution converges or a computational budget is reached.

In each loop of the training process, a reward is calculated based on the difference between the final solution and the target solution in the record that was processed in that loop. The reward may be calculated according to any suitable reward function. For example, the reward function could be the negation of the loss function in the first embodiment. Alternatively, the reward may be based on the total number of iterations required to converge (e.g., with higher rewards for fewer iterations and lower rewards for more iterations). In this case, non-linear iterative algorithm 520 should not be constrained to a fixed number of iterations. In any case, the parameters (e.g., weights) of machine-learning model 510 may be updated based on the reward (e.g., with the goal of producing a higher reward in the next loop of the training process). Then, the next record, with the next set of input features, is input to integrated model 500 for another loop of the training process, until all of the records have been processed.

In an embodiment, the reinforcement learning in the second embodiment may comprise the Proximal Policy Optimization (PPO) algorithm. The PPO algorithm is a model-free RL technique. The policy ($\pi$) in the PPO algorithm is a function that maps from the RL agent's input features (i.e., the input features in the records input to machine-learning model 510) to the probability distribution of the actions to be taken (i.e., the warm-start solutions output by machine-learning model 510). The underlying goal of the PPO algorithm is to improve the training stability of the policy by limiting the change made to the policy during each training epoch. An example of the PPO algorithm is described in "Proximal policy optimization algorithms," by J. Schulman et al., arXiv: 1707.06347v2, 2017, which is hereby incorporated herein by reference as if set forth in full.

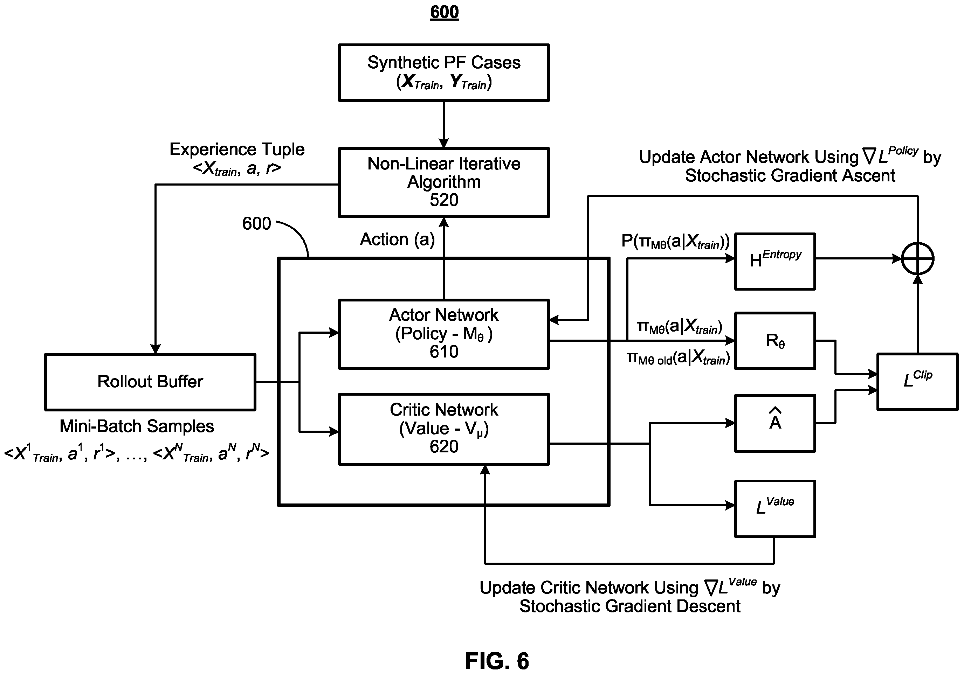

FIG. 6 illustrates an example PPO algorithm 600, according to an embodiment. PPO algorithm 600 comprises an actor network 610, also known as a policy network, and a critic network 620, also known as a value network. Actor network 610, which is policy-based, controls the actions taken (i.e., warm-start solutions output) by machine-learning model 510. Critic network 620, which is value-based, measures the quality of the taken actions.

A clipped loss function ($L^{Clip}$) is used to update actor network 610. The clipped loss function ($L^{Clip}$) may be described mathematically as:

$$L^{Clip}\left(X_{Train}, a, M_\theta, M_{\theta_{old}}\right) = \min(R_\theta \hat{A}, clip(R_\theta, 1 - \epsilon, 1 + \epsilon)\hat{A})$$

$$R_\theta = \frac{\pi_{M_\theta}(a|X_{Train})}{\pi_{M_{\theta_{old}}}(a|X_{Train})}$$

wherein *a* is the action (i.e., warm-start solution), $\hat{A}$ is the advantage of the action (*a*), $\varepsilon$ represents how much the new policy can change from the old policy (e.g., usually 0.1 or 0.2), and *clip*() clips $R_\theta$ between $1 - \varepsilon$ and $1 + \varepsilon$. The advantage ($\hat{A}$) may be estimated using the generalized advantage estimation method, which computes the discounted sum of temporal difference errors, as described in "High-Dimensional Continuous Control Using Generalized Advantage Estimation," by J. Schulman et al., arXiv:1506.02438v6, 2015, which is hereby incorporated herein by reference as if set forth in full.

A value loss function ($L^{Value}$) is used to update critic network 620. The value loss function ($L^{Value}$) may be described mathematically as:

$$L^{Value} = \frac{1}{N}\sum_{i=1}^{N}\left(V_\mu\left(X_{Train}^i\right) - R_{Total}\right)^2$$

wherein $V_\mu$ is the value head of actor network 610, and $R_{Total}$ is the target of the value function.

Entropy loss ($H^{Entropy}$) is added to the output of the clipped loss function ($L^{Clip}$) to encourage exploration in actor network 610. The entropy loss ($H^{Entropy}$) may be described mathematically as:

$$H^{Entropy} = -\frac{1}{2}\sum_{i=1}^{C}\ln(2\pi e\sigma_i^2)$$

wherein C is the total number of continuous actions output by actor network 610, *e* is Euler's constant, and $\sigma_i$ is the standard deviation of action *i*. Decreasing this negative entropy loss ($H^{Entropy}$) increases the uncertainty of the actions (*a*), thereby encouraging exploration by actor network 610.

Algorithm 3 below represents pseudocode for the training of machine-learning model 510 utilizing PPO algorithm 600, according to the second embodiment:

Algorithm 3: MPNN training with integrated NR solver using RL approach

1. Input:      Training data $(X_{Train}, Y_{Train})$

                              Training epochs $(n_{epoch})$

                              Mini-batch count $(n_{batch})$

                              Non-linear iterative algorithm $(NLIA(x))$

                              Total timesteps $(n_{timesteps})$

                              Rollout buffer length $(n_{buffer})$

                              Reward weights $w_1, w_2$

2. Output:     Trained ML Model $(M_\theta)$

3. Initialize:    Actor Network $(M_\theta)$ and Critic Network $(V_\mu)$

4. Normalize training data $(X_{Train}^{Norm}, Y_{Train}^{Norm})$

5. while $t \leq n_{timesteps}$ do

6.     Initialize empty rollout buffer of length $n_{buffer}$

7.       while $n \leq n_{buffer}$ do

8.          Sample data from training data $(X_{Train}^{Norm}, Y_{Train}^{Norm})$

9.          Using policy $\pi_{M_{\theta_{old}}}$, obtain warm-start predictions $Y_{Warm}^{Norm} = M_{\theta_{old}}(X_{Train}^{Norm})$

10.         Compute warm-start prediction loss $L_1 = L(Y_{Warm}^{Norm}, Y_{Train}^{Norm})$

11.         Denormalize the warm-start prediction $Y_{Warm}$

12.         Compute final solution $Y_{NLIA} = NLIA(Y_{Warm})$

13.         Normalize the final solution $Y_{NLIA}^{Norm}$

14.         Compute final solution prediction loss $L_2 = L(Y_{NLIA}^{Norm}, Y_{Train}^{Norm})$

15.         Computed weighted total reward $R_{Total} = -(\omega_1 L_1 + \omega_2 L_2)$

16.         Save $\{X_{Train}^{Norm}, Y_{Train}^{Norm}, Y_{Warm}, R_{Total}\}$ into the rollout buffer

17.         n = n + 1

18.         t = t + 1

19.     end

20.     while $e \leq n_{epoch}$ do

21.       Split data in rollout buffer into $n_{batch}$ mini-baches of equal length

22.       while $b \leq n_{batch}$

23.     Obtain actions from rollout buffer generated using policy $\pi_{M_{\theta_{old}}}$

24.     Obtain actions using the new policy $\pi_{M_\theta}$

25.     Compute the policy loss ($R_\theta$) using $\pi_{M_{\theta_{old}}}$ and $\pi_{M_\theta}$

26.     Compute the policy entropy loss ($H^{Entropy}$)

27.     Compute the advantage $\hat{A}$ using the critic network $V_\mu$.

28.     Compute value loss ($L^{Value}$) using MSE loss function and critic network $V_\mu$.

29.     Compute clipped loss $L^{Clip}$

30.     Compute actor network loss ($L^{Policy}$) by adding $L^{Clip}$ and $H^{Entropy}$

31.     Update the policy by maximizing the PPO clip objective using $\nabla L^{Policy}$ and stochastic gradient ascent.

32.     Update critic network by regression on MSE using $\nabla L^{Value}$ and stochastic gradient descent.

33.  return $M_\theta$

It should be understood that PPO algorithm 600 is simply one example of reinforcement learning. The second embodiment may, instead, utilize other approaches to reinforcement learning, including other policy gradient methods. Examples of other RL approaches include, without limitation, Trust Region Policy Optimization (TRPO), as described in "Trust Region Policy Optimization," by J. Schulman et al., arXiv: 1502.05477v5, 2017, which is hereby incorporated herein by reference as if set forth in full, Actor-Critic with Experience Replay (ACER), as described in "Sample Efficient Actor-Critic with Experience Replay," by Z. Wang et al., arXiv: 1611.01224v2, 2017, which is hereby incorporated herein by reference as if set forth in full, Phasic Policy Gradient (PPG), as described in "Phasic Policy Gradient," by K. Cobbe et al., arXiv: 2009.04416v1, 2020, which is hereby incorporated herein by reference as if set forth in full, and the like.

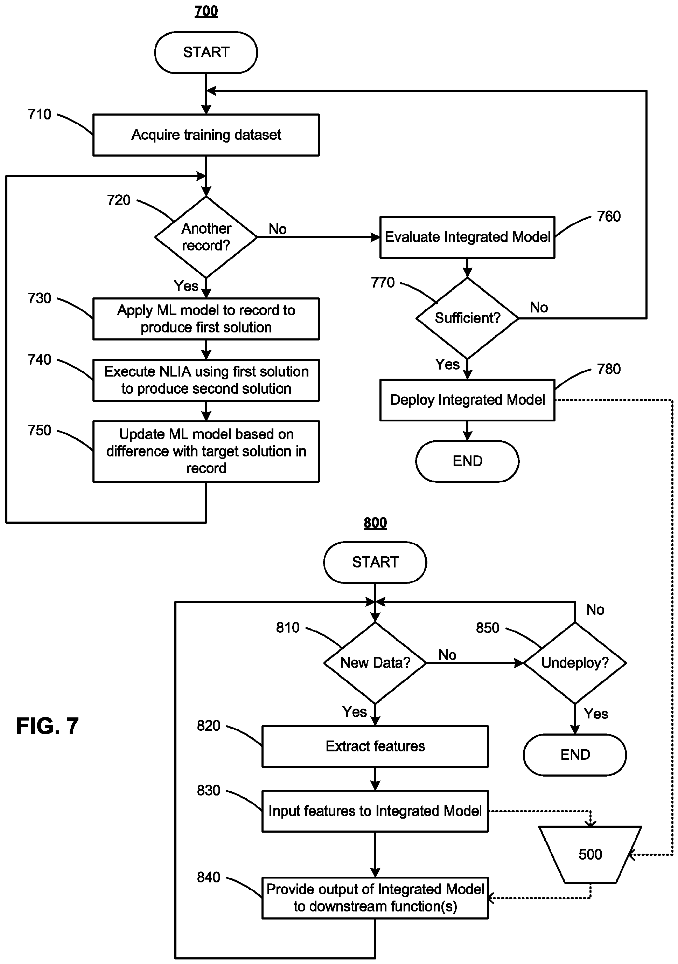

FIG. 7 illustrates a training process 700, which trains integrated model 500 in a training phase, and an operating process 800, which utilizes integrated model 500 in an operating phase, according to an embodiment. Training process 700 and/or operating process 800 may be implemented by software 112. While each process is illustrated with a certain arrangement and ordering of subprocesses, processes 700 and/or 800 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 710, a training dataset is acquired. Embodiments of the training dataset are described elsewhere herein, and therefore, will only be described again in general terms. The training dataset may comprise a plurality of records. Each of the plurality of records may comprise one or more features, labeled with a target solution. In particular, each of the plurality of records may comprise a nodal tensor that includes one or more features for each of a plurality of nodes in a graph. In addition, for each of the plurality of records, an adjacency matrix may be generated. The adjacency matrix represents a plurality of edges between the plurality of nodes in the nodal tensor. In an embodiment, to account for contingencies, any edges that are in a contingency state (e.g., failure state) are not represented in the adjacency matrix. In the context of a power system, the graph represents the power system, each of the plurality of nodes represents a bus in the power system, and each of the plurality of edges represents an electrical connection between a pair of buses. The one or more features may comprise nodal active power demand, nodal reactive power demand, node type, voltage magnitude setpoint, voltage angle setpoint, and/or the like.

In subprocesses 720-750, machine-learning model 510 is trained to provide a warm-start solution for non-linear iterative algorithm 520. In particular, an iteration of subprocesses 730-750, representing one cycle of a training loop, is performed for each of the plurality of records in the training dataset over one or more, and generally a plurality of, training epochs. Algorithms 1 and 3 represent alternative embodiments of this training loop. When another record remains to be processed (i.e., "Yes" in subprocess 720), another iteration of the training loop is performed. Otherwise, when no more records remain to be processed (i.e., "No" in subprocess 720), training process 700 ends the training loop and proceeds to subprocess 760.

In subprocess 730, machine-learning model 510 of integrated model 500 is applied to the one or more features in the record to produce a first solution. This first solution represents the warm-start solution for non-linear iterative algorithm 520 of integrated model 500. Machine-learning model 510 may comprise an artificial neural network, such as a graph neural network. In a preferred embodiment, the graph neural network is a message-passing neural network. In an embodiment in which machine-learning model 510 comprises a graph neural network, the adjacency matrix for the record may be provided, along with the one or more features, to the graph neural network.

In subprocess 740, non-linear iterative algorithm 520 of integrated model 500 is executed, using the first solution (i.e., warm-start solution) as the starting solution, to produce a second solution, representing the final solution. As discussed elsewhere, non-linear iterative algorithm 520 may comprise NR algorithm 400, another iterative root-finding algorithm, or the like. This second solution represents a state of target system 140. In the context of a power system, both the first solution and the second solution represent a state of the power system. In the more specific context of power-flow analysis, both the first solution and the second solution may comprise a voltage magnitude and a voltage angle (e.g., represented as sine and cosine values of the voltage angle) for each of the plurality of nodes in the record.

In an embodiment of subprocess 740, the number of iterations of non-linear iterative algorithm 520 may be constrained during training process 700. In particular, the number of iterations may be constrained to be less than or equal to a percentage of the average number of iterations required for non-linear iterative algorithm 520 to converge. In a fixed case, the number of iterations may be fixed to be a percentage of the average number of iterations required for non-linear iterative algorithm 520 to converge. For instance, in either case, the percentage may be 50%, in which case, the number of iterations is constrained or fixed to half the average number of iterations. As an example, the IEEE 118-bus system, which contains nineteen power generators, thirty-five synchronous condensers, one-hundred-seventy-seven electrical lines, nine transformers, and ninety-one loads, requires an average of four iterations of NR algorithm 400 to converge. In this case, the number of iterations for NR algorithm 400 may be constrained to two iterations. Empirically, when using a flat starting solution for NR algorithm 400, the error in the final solution reduces significantly in the first two iterations, with the second two iterations producing minor reductions in the error. Thus, if the flat starting solution is replaced with a warm-start solution from machine-learning model 510, there is scope for increasing the computational speed of NR algorithm 400. In this embodiment, the goal of machine-learning model 510 is to predict a warm-start solution that enables non-linear iterative algorithm 400 to converge to a reasonable final solution faster than average (i.e., within the fixed or otherwise constrained number of iterations).

In an alternative or additional embodiment of subprocess 740 that utilizes NR algorithm 400 or another non-linear iterative algorithm 520 that repetitively inverts the Jacobian matrix, the inverted Jacobian matrix may calculated once (e.g., in the first iteration of subprocess 440) and fixed to that calculated value in every subsequent iteration (e.g., retrieved from memory in every subsequent iteration of subprocess 440). In particular, the inverted Jacobian matrix may be calculated and stored in memory in the first iteration of non-linear iterative algorithm 520, for retrieval in every subsequent iteration of non-linear iterative algorithm 520. Calculating the inverted Jacobian matrix is computationally expensive, especially for a sparse network. Thus, by only calculating the inverted Jacobian matrix once, and fixing it thereafter, the overall computational expense (e.g., computational time) of non-linear iterative algorithm 520 can be significantly reduced. Furthermore, empirically, the inverted Jacobian matrix does not change much after the first iteration, and therefore, the accuracy of non-linear iterative algorithm 520 is not significantly affected.

In subprocess 750, machine-learning model 510 is updated based on a difference with the target solution in the record. Again, machine-learning model 510 may be an artificial neural network, such as a graph neural network, such as a message-passing neural network. The difference with the target solution in the record may be a difference between the first solution (i.e., warm-start solution) and the target solution in the record and/or a difference between the second solution (i.e., final solution) and the target solution in the record. In an embodiment, the difference is a composite training loss, derived from a weighted combination of a first loss function, based on the difference between the first solution and the target solution, and a second loss function, based on the difference between the second solution and the target solution. In an alternative embodiment, machine-learning model 510 is updated using reinforcement learning, in which the reward is based on the difference between the first solution and the target solution and/or the difference between the second solution and the target solution. In particular, the reward may be calculated based on a loss function that calculates a loss based on the difference between the first solution and the target solution and/or the difference between the second solution and the target solution. The reinforcement learning may utilize PPO algorithm 600 or any other suitable RL method.

In subprocess 760, integrated model 500, having been trained by the training loop formed by subprocesses 720-750, is evaluated. Algorithm 2 represents one embodiment of subprocess 760. Subprocess 760 may utilize a testing dataset, which may comprise a portion of the training dataset, acquired in subprocess 710, that is not utilized in the training loop formed by subprocess 720-750. The output of subprocess 760 may be a measure of accuracy, efficiency, or the like of integrated model 760. Any suitable evaluation metric or metrics may be used.

In subprocess 770, it is determined whether or not integrated model 500 is sufficient. For example, each evaluation metric of integrated model 500 may be compared to a predefined threshold. When the evaluation metric satisfies (e.g., is equal to or greater than) the predefined threshold, integrated model 500 may be determined to be sufficient. On the other hand, when the evaluation metric does not satisfy (e.g., is less than) the predefined threshold, integrated model 500 may be determined not to be sufficient. When determining that integrated model 500 is sufficient (i.e., "Yes" in subprocess 770), training process 700 may proceed to subprocess 780. Otherwise, when determining that integrated model 500 is not sufficient (i.e., "No" in subprocess 770), training process 700 may return to subprocess 710 to retrain machine-learning model 510, for example, using a new training dataset.

In subprocess 780, integrated model 500 may be deployed. For example, integrated model 500 may be deployed from a training or development environment to an operating or production environment. As an example, integrated model 500 may be deployed with an application programming interface that is accessible to other services on management system 110 (e.g., in a microservices architecture), such as analysis and control module 330. Alternatively, integrated model 500 may be integrated into analysis and control module 330 or stored in database 114 (e.g., as or in association with system model 350).

Once deployed, integrated model 500 may be utilized in operating process 800. It should be understood that deployed integrated model 500 is the same as the integrated model 500 that was trained during training process 700. However, during the operating phase, integrated model 500 will no longer backpropagate error (e.g., model error 515 and/or algorithm error 525) or utilize reinforcement learning to train machine-learning model 510.

In subprocess 810, it is determined whether or not new data are received. For example, new data may be received in system telemetry from monitoring module 310 of target system 140. This data may be received continuously (e.g., in real time), periodically, in response to an event (e.g., user operation or other trigger), and/or the like. When new data are received (i.e., "Yes" in subprocess 810, operating process 800 proceeds to subprocess 820. Otherwise, when new data are not received (i.e., "No" in subprocess 810), operating process 800 proceeds to subprocess 850.

In subprocess 820, one or more, and generally a plurality of, features are extracted from the data. It should be understood that these feature(s) are the same feature(s) that were included for each of the plurality of nodes in the plurality of records in the training dataset acquired in subprocess 710.

In subprocess 830, the feature(s), extracted in subprocess 820, are input to integrated model 500, as deployed in subprocess 780 of training process 700. In particular, the trained machine-learning model 510 (e.g., an artificial neural network, such as a graph neural network, such as a message-passing neural network) of integrated model 500 processes the feature(s) to produce a first solution (i.e., warm-start solution), which is then provided to non-linear iterative algorithm 520 of integrated model 500, which outputs a second solution (i.e., final solution). In the context of power-flow analysis, both the first solution and the second solution may comprise the voltage magnitude and voltage angle for each of the plurality of nodes in the graph of the power system.

In subprocess 840, the output of integrated model 500 may be provided to one or more downstream functions. A downstream function is any function that may utilize the final solution from integrated model 500 for target system 140. For example, analysis and control module 330 may utilize the final solution to produce one or more control signals that are transmitted to control module 320 to control one or more components of target system 140, for example, to adjust an operating configuration of target system 140.

In the context of power-flow analysis, analysis and control module 330 may determine power flow in the electrical lines (i.e., edges of the graph) of the power system based on the voltage magnitude and voltage angle of the plurality of buses (i.e., nodes of the graph). Then, analysis and control module 330 may adjust a configuration of the power system based on the determined power flow. Adjusting the configuration of the power system may comprise controlling an amount of power injected by at least one generator (e.g., at a bus) in the power system, adjusting an amount of power supplied to a load in the power system, adjusting a voltage setpoint (e.g., on a voltagecontrolling device) in the power system (e.g., to perform voltage regulation, reactive power compensation, etc.), adjusting a load in the power system (e.g., load-shedding), re-dispatching power generation to reduce network congestion, modifying network topology, and/or the like.

In subprocess 850, it is determined whether or not integrated model 500 is to be undeployed. For example, undeployment may be performed in response to a user operation via human-to-machine interface 340. When determining to undeploy integrated model 500 (i.e., "Yes" in subprocess 850), operating process 800 may end. Otherwise, when determining not to undeploy integrated model 500 (i.e., "No" in subprocess 850), operating process 800 may return to subprocess 810.

## 9. Example Applications

As discussed throughout the present disclosure, the disclosed embodiments may be applied to a target system 140 that comprises or consists of a power system. In this context, integrated model 500 may be used to perform power-flow analysis on an input, representing power generation and load (e.g., the described input features) and network topology (e.g., as an adjacency matrix), to produce steady-state power flow, comprising voltage magnitudes and angles (e.g., the final solution, comprising the described output features). This steady-state power flow may then be used as an input to any downstream function that normally uses power flow. The fact that machine-learning model 510 is used to produce a warm-start solution for non-linear iterative algorithm 520 does not change the applicability of the final solution to any downstream function in which the result of a power-flow analysis is used. The only difference is a decrease in computational time required to determine the final solution and an increase in the stability of the determined final solutions.

It should be understood that the disclosed embodiments can be generalized to implement other system-planning and system-operation tasks, including, without limitation, non-linear optimal power flow (e.g., security-constrained optimal power flow), DER management, situational awareness about the network, contingency analysis or security analysis, Volt-Var optimization, loadability analysis, and/or the like. Even more generally, the disclosed embodiments may be utilized to provide warm-start solutions for any iterative algorithm that would benefit from a good starting solution or other starting condition.

As an example, the final solution (e.g., comprising voltage magnitudes and angles), output by the power-flow analysis performed by integrated model 500, can be used in a downstream function to calculate the amount of power flowing on power lines within the network of a power system. From the calculated amounts of power flow on the power lines, it can be determined whether any of the power lines are overloaded (e.g., beyond rated limits). This information is beneficial for managing network congestion, since operators can redispatch power generation in the network to eliminate the congestion. For example, if a power line is overloaded (e.g., the amount of power flow exceeds a predefined threshold), analysis and control module 330 (e.g., automatically or in response to an operator input) may activate, or increase the power supplied by, one or more power generators in another part of the network to relieve the congestion in the overloaded power line.

As another example, final solutions of integrated model 500 for different contingency scenarios can be used to determine whether or not the network is secure. In this context, a network may be deemed insecure if the failure of a component of the network would cause substantial network congestion or cause the network voltage to shift outside of defined limits. Accordingly, one or more contingency scenarios may be supplied to integrated model 500 (e.g., by switching various nodes into a contingency state) to determine the effect on network congestion or network voltage when one or more components fail. This can aid an operator in system planning and/or system operation.

As another example, the final solution of integrated model 500 can be used to manage reactive power compensation. In particular, the final solution can be used to determine how much reactive power compensation must be applied to a load bus in order to improve the voltage profile at that load bus. Based on the determined reactive power compensation, analysis and control module 330 may control (e.g., automatically or in response to an operator input), via control module 320, a reactive power compensation device on the network within the power system to adjust the voltage profile at the load bus.

As another example, final solutions of integrated model 500 can be used in system planning. For instance, when new equipment, such as an electrical line or transformer, needs to be installed, each of the old network topology and the new network topology (e.g., as adjacency matrices) may be provided to integrated model 500 to determine the power flow in each topology. The differences between the power flows for the old and new topologies can then be compared to understand the impact of the new equipment on the network of the power system. This understanding can inform system planning and investment decisions, inform measures for reducing power losses in the network, and/or the like.

10. Experimental Results

An implementation, utilizing Algorithms 1 and 2, was tested in the context of power-flow analysis on an IEEE 118-bus system. In this experiment, machine-learning model 510 was a message-passing neural network with six hidden layers, thirty-two hidden layer dimensions, and forty-thousand trainable parameters. In addition, non-linear iterative algorithm 520 was an implementation of NR algorithm 400, with the number of iterations constrained to two when the inverted Jacobian matrix was not fixed and the number of iterations constrained to five when the inverted Jacobian matrix was fixed. There were twelve-thousand records in the training dataset, and five-thousand records in the testing dataset. Test cases were performed with the weights $(w_1, w_2)$ for the loss functions equal to (0, 1) and (0.5, 0.5). The table below illustrates the results for the four test cases:

| Case | Constraints | Weights | Prediction Score (MSE) | |
|------|-------------|---------|---------------------------|---|
| | | | $V^{Magnitude}$ (p.u.) | $V^{Angle}$ (radians) |
| 1 | iterations constrained to 2 $J^{-1}$ not fixed | $w_1 = 0.5$ $w_2 = 0.5$ | 0.000021 | 0.0246 |
| 2 | iterations constrained to 2 $J^{-1}$ not fixed | $w_1 = 0$ $w_2 = 1$ | 0.0000072 | 0.0025 |
| 3 | iterations constrained to 5 $J^{-1}$ fixed | $w_1 = 0.5$ $w_2 = 0.5$ | 0.000043 | 0.0387 |
| 4 | iterations constrained to 5 $J^{-1}$ fixed | $w_1 = 0$ $w_2 = 1$ | 0.000012 | 0.0023 |

Notably, test cases 2 and 4 (i.e., $(w_1, w_2) = (0,1)$) demonstrated the best results among the four test cases. Overall, the MPNN-determined warm-start solution proved beneficial in obtaining accurate power-flow solutions within just two iterations, relative to the traditional flat starting solution. The advantage of fixing the inverted Jacobian matrix is that the number of iterations can be increased, relative to an embodiment that does not fix the inverted Jacobian matrix, without a significant increase in the overall computational time of integrated model 500.

To quantify the improvements in computational speed, the warm-start solutions in test cases 2 and 4 were tested against flat starting solutions for NR algorithm 400, with the maximum number of iterations of NR algorithm 400 set to one hundred. The tables below show the resulting computational times:

Test Case 2 vs. Flat-Starting Solution

| Starting Solution | % Converged | Avg. Iterations | Avg. Time | % Speed Up |
|---|---|---|---|---|
| Flat | 100 | 5.14 | 12.0 ms | N/A |
| Warm-Start | 100 | 5.01 | 10.0 ms | 16.66 |

Test Case 4 vs. Flat-Starting Solution

| Starting Solution | % Converged | Avg. Iterations | Avg. Time | % Speed Up |
|---|---|---|---|---|
| Flat | 100 | 13.24 | 12.0 ms | N/A |
| Warm-Start | 92.4 | 5.01 | 6.2 ms | 48.33 |

Notably, the warm-start solutions in both of test cases 2 and 4 achieved a significant reduction in computational time, relative to a flat starting solution. In addition, the use of a fixed inverted Jacobian matrix in test case 4 produced a significant reduction in computational time, relative to a non-fixed inverted Jacobian matrix in test case 2.

11. Example Embodiments

Embodiments of integrated system 500 may provide numerous advantages over the state of the art. One objective achievable by disclosed embodiments is the maintenance of a model that is interpretable and trustworthy to system operators, while still obtaining the benefits of machine learning, which is generally not interpretable or trustworthy. Another objective achievable by disclosed embodiments is the enhancement, instead of the replacement, of a well-known, well-tested non-linear iterative algorithm. Another objective achievable by disclosed embodiments is a reduction in the computational time required for convergence of a non-linear iterative algorithm, while maintaining or improving the accuracy of the final solution. Another objective achievable by disclosed embodiments is a reduction in the frequency of training by providing a robust model that does not need to be retrained for every change in network topology or operating conditions. Another objective achievable by disclosed embodiments is the application of integrated model 500 to power-flow analysis in power systems.

To address one or more of these objectives, example embodiments include, without limitation:

Embodiment 1: A method comprising using at least one hardware processor to: acquire a training dataset comprising a plurality of records, wherein each of the plurality of records comprises one or more features labeled with a target solution; and train an artificial neural network to provide a warm-start solution for a non-linear iterative algorithm by, for each of the plurality of records, applying the artificial neural network to the one or more features in the record to produce a first solution, executing the non-linear iterative algorithm, using the first solution as a starting solution, to produce a second solution, and updating the artificial neural network based on a difference between the second solution and the target solution in the record. This embodiment produces an interpretable, trustworthy, and robust model that reduces computational time, while maintaining accuracy.

Embodiment 2: The method of Embodiment 1, wherein the artificial neural network is a graph neural network. This embodiment is well-suited for target systems 140 that comprise networks or can otherwise be represented as a graph.

Embodiment 3: The method of Embodiment 2, wherein the graph neural network is a message-passing neural network. This embodiment is well-suited for power systems.

Embodiment 4: The method of any preceding Embodiment, wherein each of the plurality of records comprises a nodal tensor that includes the one or more features for each of a plurality of nodes in a graph. This embodiment facilitates training.

Embodiment 5: The method of Embodiment 4, wherein training the artificial neural network further comprises, for each of the plurality of records: generating an adjacency matrix that represents a plurality of edges between the plurality of nodes, wherein any edges that are in a contingency state are not represented in the adjacency matrix; and providing the adjacency matrix to the graph neural network. This embodiment is well-suited for target systems 140 that comprise networks or can otherwise be represented as a graph.

Embodiment 6: The method of Embodiment 4 or 5, wherein the first solution represents the warm-start solution for the non-linear iterative algorithm, wherein the second solution represents a state of a power system, and wherein the graph represents the power system. This embodiment applies integrated model 500 to a power system.

Embodiment 7: The method of Embodiment 6, wherein the one or more features comprise one or more of nodal active power demand, nodal reactive power demand, node type, voltage magnitude setpoint, or voltage angle setpoint, and wherein each of the first solution and the second solution comprises a voltage magnitude and a voltage angle for each of the plurality of nodes. This embodiment applies integrated model 500 to a power system.

Embodiment 8: The method of Embodiment 7, further comprising using the at least one hardware processor to: deploy the graph neural network to output the first solution comprising the voltage magnitude and the voltage angle for each of the plurality of nodes; deploy the non-linear iterative algorithm to use the first solution as a starting solution to produce the second solution comprising the voltage magnitude and the voltage angle for each of the plurality of nodes; determine power flow in electrical lines within the power system based on the voltage magnitudes and the voltage angles of the plurality of nodes; and adjust a configuration of the power system based on the determined power flow. This embodiment applies integrated model 500 to a power system.

Embodiment 9: The method of Embodiment 8, wherein adjusting the configuration comprises one or more of controlling an amount of power injected by at least one generator in the power system, adjusting an amount of power supplied to a load in the power system, or adjusting a voltage setpoint in the power system. This embodiment applies integrated model 500 to a power system.

Embodiment 10: The method of any preceding Embodiment, wherein the non-linear iterative algorithm is a Newton-Raphson algorithm. This embodiment incorporates a well-known, well-tested non-linear iterative algorithm, to improve confidence in the final solution.

Embodiment 11: The method of Embodiment 10, wherein an inverse of a Jacobian matrix in the Newton-Raphson algorithm is fixed after a first iteration of the Newton-Raphson algorithm. This embodiment decreases computational time.

Embodiment 12: The method of any preceding Embodiment, wherein the artificial neural network is updated based on the difference between the second solution and the target solution and a difference between the first solution and the target solution. This embodiment enables prioritization and flexibility in how machine-learning model 510 is trained.

Embodiment 13: The method of Embodiment 12, wherein the artificial neural network is updated based upon a weighted combination of a first loss function, based on the difference between the first solution and the target solution, and a second loss function, based on the difference between the second solution and the target solution. This embodiment enables prioritization and flexibility in how machine-learning model 510 is trained.

Embodiment 14: The method of any preceding Embodiment, wherein the artificial neural network is updated using reinforcement learning in which a reward is based upon the difference between the second solution and the target solution. This embodiment enables training of machine-learning model 510 when backpropagation is not feasible.

Embodiment 15: The method of Embodiment 14, wherein the reward is calculated based on a loss function that calculates a loss based on the difference between the second solution and the target solution. This embodiment enables training of machine-learning model 510 when backpropagation is not feasible.

Embodiment 16: The method of Embodiment 14 or 15, wherein the reinforcement learning utilizes a proximal policy optimization algorithm. This embodiment enables training of machine-learning model 510 when backpropagation is not feasible.

Embodiment 17: The method of any preceding Embodiment, further comprising constraining a number of iterations of the non-linear iterative algorithm. This embodiment enables training of machine-learning model 510 to produce a warm-start solution that reduces the number of iterations required by the non-linear iterative algorithm, thereby reducing overall computational time.

Embodiment 18: The method of Embodiment 17, wherein the number of iterations is constrained to be less than or equal to a percentage of an average number of iterations required for the non-linear iterative algorithm to converge. This embodiment enables training of machine-learning model 510 to produce a warm-start solution that reduces the number of iterations required by the non-linear iterative algorithm, thereby reducing overall computational time.

Embodiment 19: A system comprising: at least one hardware processor; and software configured to, when executed by the at least one hardware processor, perform the method of any one of Embodiments 1 through 18.

Embodiment 20: A non-transitory computer-readable medium having instructions stored thereon, wherein the instructions, when executed by a processor, cause the processor to: perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor to:

    acquire a training dataset comprising a plurality of records, wherein each of the plurality of records comprises one or more features labeled with a target solution; and
    train an artificial neural network to provide a warm-start solution for a non-linear iterative algorithm by, for each of the plurality of records,

        applying the artificial neural network to the one or more features in the record to produce a first solution,
        executing the non-linear iterative algorithm, using the first solution as a starting solution, to produce a second solution, and
        updating the artificial neural network based on a difference between the second solution and the target solution in the record.

2. The method of Claim 1, wherein the artificial neural network is a graph neural network.

3. The method of Claim 2, wherein the graph neural network is a message-passing neural network.

4. The method of Claim 2, wherein each of the plurality of records comprises a nodal tensor that includes the one or more features for each of a plurality of nodes in a graph.

5. The method of Claim 4, wherein training the artificial neural network further comprises, for each of the plurality of records:

    generating an adjacency matrix that represents a plurality of edges between the plurality of nodes, wherein any edges that are in a contingency state are not represented in the adjacency matrix; and
    providing the adjacency matrix to the graph neural network.

6. The method of Claim 4, wherein the first solution represents the warm-start solution for the non-linear iterative algorithm, wherein the second solution represents a state of a power system, and wherein the graph represents the power system.

7. The method of Claim 6, wherein the one or more features comprise one or more of nodal active power demand, nodal reactive power demand, node type, voltage magnitude setpoint, or voltage angle setpoint, and wherein each of the first solution and the second solution comprises a voltage magnitude and a voltage angle for each of the plurality of nodes.

8. The method of Claim 7, further comprising using the at least one hardware processor to:

deploy the graph neural network to output the first solution comprising the voltage magnitude and the voltage angle for each of the plurality of nodes;
deploy the non-linear iterative algorithm to use the first solution as a starting solution to produce the second solution comprising the voltage magnitude and the voltage angle for each of the plurality of nodes;
determine power flow in electrical lines within the power system based on the voltage magnitudes and the voltage angles of the plurality of nodes; and
adjust a configuration of the power system based on the determined power flow.

9. The method of Claim 8, wherein adjusting the configuration comprises one or more of controlling an amount of power injected by at least one generator in the power system, adjusting an amount of power supplied to a load in the power system, or adjusting a voltage setpoint in the power system.

10. The method of Claim 1, wherein the non-linear iterative algorithm is a Newton-Raphson algorithm.

11. The method of Claim 10, wherein an inverse of a Jacobian matrix in the Newton-Raphson algorithm is fixed after a first iteration of the Newton-Raphson algorithm.

12. The method of Claim 1, wherein the artificial neural network is updated based on the difference between the second solution and the target solution and a difference between the first solution and the target solution.

13. The method of Claim 12, wherein the artificial neural network is updated based upon a weighted combination of a first loss function, based on the difference between the first solution and the target solution, and a second loss function, based on the difference between the second solution and the target solution.

14. The method of Claim 1, wherein the artificial neural network is updated using reinforcement learning in which a reward is based upon the difference between the second solution and the target solution.

15. The method of Claim 14, wherein the reward is calculated based on a loss function that calculates a loss based on the difference between the second solution and the target solution.

16. The method of Claim 14, wherein the reinforcement learning utilizes a proximal policy optimization algorithm.

17. The method of Claim 1, further comprising constraining a number of iterations of the non-linear iterative algorithm.

18. The method of Claim 17, wherein the number of iterations is constrained to be less than or equal to a percentage of an average number of iterations required for the non-linear iterative algorithm to converge.

19. A system comprising:

at least one hardware processor; and
software configured to, when executed by the at least one hardware processor,

acquire a training dataset comprising a plurality of records, wherein each of the plurality of records comprises one or more features labeled with a target solution, and
train an artificial neural network to provide a warm-start solution for a non-linear iterative algorithm by, for each of the plurality of records,

applying the artificial neural network to the one or more features in the record to produce a first solution,
executing the non-linear iterative algorithm, using the first solution as a starting solution, to produce a second solution, and
updating the artificial neural network based on a difference between the second solution and the target solution in the record.

20. A non-transitory computer-readable medium having instructions stored thereon, wherein the instructions, when executed by a processor, cause the processor to:

acquire a training dataset comprising a plurality of records, wherein each of the plurality of records comprises one or more features labeled with a target solution; and

train an artificial neural network to provide a warm-start solution for a non-linear iterative algorithm by, for each of the plurality of records,

applying the artificial neural network to the one or more features in the record to produce a first solution,

executing the non-linear iterative algorithm, using the first solution as a starting solution, to produce a second solution, and

updating the artificial neural network based on a difference between the second solution and the target solution in the record.

**FIG. 1**

**200**

FIG. 2

**FIG. 3**

**400**

```
        ┌─────────┐
        │  START  │
        └─────────┘
             │
             ▼
```

405 ─── Load Data (initial *V*, *P*, *Q* for all buses)

410 ─── Build Network Admittance Matrix *Y*

415 ─── Set Iteration = 1

420 ─── Calculate Power Injections Using Equations (1) and (2)    ◄──── 450 Set Iteration += 1

425 ─── Calculate Power Injection Error $\Delta P$ and $\Delta Q$

430 ─── ($\Delta P$, $\Delta Q$) < Threshold OR Iteration >= Max?

455 ─── Stop and Report Solution ◄── Yes

```
┌─────┐
│ END │
└─────┘
```

No ▼

435 ─── Calculate Jacobian Matrix J

440 ─── Calculate Correction Vector $[\Delta V^M; \Delta V^A] = J^{-1}[\Delta P; \Delta Q]$

445 ─── Update Voltage Values
$V^M_{new} = V^M_{prev} + \Delta V^M$
$V^A_{new} = V^A_{prev} + \Delta V^A$

**FIG. 4**

**FIG. 5A**

FIG. 5B

**600**

Synthetic PF Cases
($X_{Train}$, $Y_{Train}$)

Non-Linear Iterative Algorithm
**520**

Experience Tuple
$<X_{train}, a, r>$

Update Actor Network Using $\nabla L^{Policy}$ by Stochastic Gradient Ascent

Action (a)

$P(\pi_{M\theta}(a|X_{train}))$

$H^{Entropy}$

Actor Network
(Policy - $M_\theta$)
**610**

$\pi_{M\theta}(a|X_{train})$

$\pi_{M\theta\ old}(a|X_{train})$

$R_\theta$

Rollout Buffer

Critic Network
(Value - $V_\mu$)
**620**

$L^{Clip}$

Mini-Batch Samples
$<X^1_{Train}, a^1, r^1>, ..., <X^N_{Train}, a^N, r^N>$

$\hat{A}$

$L^{Value}$

Update Critic Network Using $\nabla L^{Value}$ by Stochastic Gradient Descent

**FIG. 6**

EP 4 528 587 A1

**700**

START

710 — Acquire training dataset

720 — Another record?

No → 760 — Evaluate Integrated Model

770 — Sufficient?

No

Yes ↓

730 — Apply ML model to record to produce first solution

740 — Execute NLIA using first solution to produce second solution

750 — Update ML model based on difference with target solution in record

780 — Deploy Integrated Model

END

**FIG. 7**

**800**

START

810 — New Data?

No → 850 — Undeploy?

No

Yes ↓

820 — Extract features

830 — Input features to Integrated Model

840 — Provide output of Integrated Model to downstream function(s)

500

Yes ↓

END

**Europäisches Patentamt**
**European Patent Office**
**Office européen des brevets**

# EUROPEAN SEARCH REPORT

Application Number

EP 23 20 3200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wu Tong ET AL: "Constrained Reinforcement Learning for Stochastic Dynamic Optimal Power Flow Control", <br><br> 7 July 2023 (2023-07-07), XP093142922, Retrieved from the Internet: URL:https://arxiv.org/pdf/2302.10382.pdf [retrieved on 2024-03-19] * the whole document * <br><br>----- | 1-20 | INV. G06N3/042 G06N3/084 G06N3/09 G06N3/092 |

**TECHNICAL FIELDS SEARCHED (IPC)**

G06N

The present search report has been drawn up for all claims

| Place of search | Date of completion of the search | Examiner |
|---|---|---|
| The Hague | 19 March 2024 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. SCARSELLI et al.** The Graph Neural Network Model. *IEEE Transactions on Neural Networks*, 2009, 61-80
- **J. GILMER et al.** Neural Message Passing for Quantum Chemistry. *arXiv:1704.01212*, April 2017, 1-14
- **J. SCHULMAN et al.** Proximal policy optimization algorithms. *arXiv: 1707.06347v2*, 2017
- **J. SCHULMAN et al.** High-Dimensional Continuous Control Using Generalized Advantage Estimation. *arXiv:1506.02438v6*, 2015
- **J. SCHULMAN et al.** Trust Region Policy Optimization. *arXiv: 1502.05477v5*, 2017
- **Z. WANG et al.** Sample Efficient Actor-Critic with Experience Replay. *arXiv: 1611.01224v2*, 2017
- **K. COBBE et al.** Phasic Policy Gradient. *arXiv: 2009.04416v1*, 2020